# EUROPEAN PATENT SPECIFICATION

(11) **EP 4 451 438 B1**
(45) Date of publication and mention of the grant of the patent: **22.10.2025**
(21) Application number: 24153595.4
(22) Date of filing: 24.01.2024
(51) Int. Cl.: H01M 50/15, H01M 50/188, H01M 50/533, H01M 50/534, H01M 50/536

(54) **SECONDARY BATTERY**
SEKUNDÄRBATTERIE
BATTERIE SECONDAIRE

(30) Priority: 21.04.2023 KR 20230052504
(43) Date of publication of application: 23.10.2024
(73) Proprietor: Samsung SDI Co., Ltd., Yongin-si, Gyeonggi-do 17084 (KR)
(72) Inventor: Bae, Kwang Soo, 17084 Yongin-si, Gyeonggi-do (KR); Yong, Jun Sun, 17084 Yongin-si, Gyeonggi-do (KR); Lee, Jun Hyung, 17084 Yongin-si, Gyeonggi-do (KR); Kim, Jung Soo, 17084 Yongin-si, Gyeonggi-do (KR)
(74) Representative: Gulde & Partner

(56) References cited:
- WO-A1-2023/005005
- CN-U- 218 827 726
- US-A1- 2020 411 807
- US-B2- 8 709 621

## Description

### BACKGROUND

### 1. Field

Aspects of embodiments of the present invention relate to a secondary battery.

### 2. Description of the Related Art

A secondary battery is a power storage system that provides excellent energy density to change electrical energy into chemical energy so as to store the chemical energy. As compared to non-rechargeable primary batteries, secondary batteries are rechargeable and are widely used for IT devices such as smartphones, cellular phones, laptops, tablet PCs, and the like.

In recent years, interest in electric vehicles has increased to prevent or reduce environmental pollution, and, accordingly, high-capacity secondary batteries are being adopted for the electric vehicles. Such secondary batteries are required to have characteristics such as high density, high output, and stability.

For example, CN 218 827 726 U discloses a cylindrical battery, which includes an electrode assembly in which a first electrode, a second electrode, and a separator interposed therebetween are wound. The first electrode and the second electrode include a first uncoated portion and a second uncoated portion along a winding direction, respectively. At least one of the first uncoated portion and the second uncoated portion is defined as an electrode tab by itself and includes a core-side uncoated portion, an outer circumference uncoated portion, and an intermediate uncoated portion interposed between the core-side uncoated portion and the outer circumference uncoated portion. US 2020/411807 A1 describes a secondary battery comprising: a cap assembly comprising a cap plate comprising an electrode lead-out hole and an electrode terminal disposed on the cap plate and covering the electrode lead-out hole; a current collector comprising a main body located at a side of the cap plate and an extending portion extending toward the electrode terminal. WO 2023/005005 A1 relates to a secondary battery including a top cover plate, cell assemblies, and insulators arranged between the top cover plate and the cell assemblies and configured to isolate the cell assemblies from the top cover plate. Each of the cell assemblies includes a cell body and tabs arranged on the cell body; the secondary battery includes electrode terminals, the electrode terminals pass through the top cover plate and the insulators and being connected to the tabs. Bottom ends of the electrode terminals extend along the bottom surfaces of the insulators to form extension parts. The extension parts are fixedly connected to the tabs. US 8 709 621 B2 discloses a rechargeable battery including a current interruption device that is directly coupled to the cap plate of the bare cell.

The above-described information disclosed in the technology that serves as the background of the present invention is provided for improving understanding of the background of the present invention and thus may include information that does not constitute the related art.

### SUMMARY

The present invention is set out in the appended set of claims, wherein the drawings and respective description relate to advantageous embodiments thereof. It was an object of the present invention to provide a secondary battery capable of improving weldability and bonding strength between a terminal and a collector plate. In particular, the present invention aimed to prevent damage to the electrode assembly even in the presence of excessive interference, to mitigate vibration of the electrode assembly after welding, to improve the usability of the collector plate, and to simplify the components.

According to the present invention, a secondary battery includes: an electrode assembly including a first electrode tab and a second electrode tab, which are exposed at opposite sides, respectively; a first collector electrically connected to the first electrode tab; a case configured to accommodate the electrode assembly and the first collector and having opposite open sides; a first cap plate configured to seal an opening of a first side of the case; and a first terminal electrically connected to the first collector and exposed to an outside of the first cap plate, and the first collector includes a first collector plate at a side of the first electrode tab and a second collector plate at a side of the first terminal, the first collector plate includes: a central portion that is in contact with the second collector plate; an edge portion extending from the central portion in opposite directions and coupled to the first electrode tab; and a connection portion located between the central portion and the edge portion in a direction from the central portion to the edge portion extending in the opposite direction from the central portion, the connection portion including at least one bent part.

The connection portion may include: a first flat part extending from the central portion; a first bent part extending from the first flat part; a second flat part extending from the first bent part; a second bent part extending from the second flat part; and a third flat part extending from the second bent part.

The connection portion may be provided as an elastically deformable material having any of a C-type, an omega (Ω) type, a convex ( 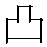 ) type, a bridge type, and a bellows type.

In the central portion, a central area may protrude outward, and an outer surface may be coupled to an inside of the second collector plate.

The first collector plate and the second collector plate may be integrated with each other.

The first collector plate and the second collector plate may be separably provided.

The secondary battery may further include a protrusion protruding outward on a central area of the second collector plate.

An outer surface of the protrusion may be in contact with and welded to an inner surface of the first terminal.

The first terminal may have a first terminal groove at a position corresponding to the protrusion.

The first terminal may include a first terminal plate, and the protrusion may be in contact with an area of the first terminal plate, which is adjacent to the first terminal groove.

The first terminal groove may have a diameter less than that of the protrusion.

The secondary battery may further include an insulating member between the first terminal and the first cap plate.

The electrode assembly may include a Z-stack electrode assembly in which a positive electrode plate and a negative electrode plate are inserted into both sides of a separator that is bent in a form of a Z-stack.

In the electrode assembly, the separator may be fixed by a glue member.

The glue member may be located inside the first collector.

The secondary battery may further include a clad sheet between the first collector and the first terminal.

### BRIEF DESCRIPTION OF THE DRAWINGS

The accompanying drawings are included to provide a further understanding of the present invention, and are incorporated in and constitute a part of this specification. The drawings illustrate some example embodiments of the present invention and, together with the description, serve to explain principles of the present invention. In the drawings:
FIG. 1 illustrates a perspective view of a secondary battery according to one or more embodiments;
FIG. 2 illustrates a cross-sectional view taken along the line 2-2' in the secondary battery of FIG. 1;
FIG. 3 illustrates an enlarged partial cross-sectional view of a region "3" in FIG. 2; and
FIG. 4 illustrates an exploded perspective view before a terminal and a collector of the secondary battery are coupled to each other.

### DETAILED DESCRIPTION

While some embodiments of the present invention are described herein, embodiments of the present invention may, however, be embodied in many different forms and should not be construed as being limited to the embodiments set forth herein; rather, these embodiments are provided so that those skilled in the art thoroughly understand the present invention. Rather, these embodiments are provided so that this invention will be thorough and complete, and will fully convey the scope of the present invention to those skilled in the art.

In addition, in the following drawings, the thickness or size of each layer may be exaggerated for convenience and clarity of description, and the same reference numerals in the drawings refer to the same elements. As used herein, the term "and/or" includes any and all combinations of one or more of the associated listed items. In addition, the meaning of "connected" in this specification includes not only a member A and a member B being directly connected, but also a member A and a member B being indirectly connected by one or more interposing members C between member A and member B.

The terms used in this specification are for illustrative purposes of the present invention and should not be construed to limit the meaning or the scope of the present invention. As used in this specification, a singular form may, unless definitely indicating a particular case in terms of the context, include a plural form. Also, the expressions "comprise" and/or "comprising" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, regions, layers, and/or portions. However, it is to be understood that the members, components, regions, layers, and/or portions are not to be defined by these terms. The terms do not mean a particular order, up and down, or superiority, and are used for distinguishing one member, component, area, layer, or portion from another member, component, area, layer, or portion. Thus, a first member, component, area, layer, or portion which will be described may also refer to a second member, component, area, layer, or portion, without departing from the teachings of the present invention.

Spatially relative terms, such as "below," "beneath," "lower," "above," "upper," and the like, may be used herein for ease of description to describe one element or feature's relationship to another element(s) or feature(s) as illustrated in the figures. These spatially relative terms are intended for ease of comprehension of the present invention according to various process states or usage states of the present invention, and, thus, the present invention is not limited thereto. For example, if an element or feature shown in the drawings is turned, the element or feature described as "beneath" or "below" may change into "above" or "upper." Thus, the term "below" may encompass the term "above" or "below."

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, some embodiments will be described in further detail with reference to the accompanying drawings. Example embodiments of the present invention will be described in further detail with reference to the accompanying drawings so that those skilled in the art can easily implement the present invention.

Here, throughout the specification, parts having similar configurations and operations are denoted by the same reference numerals. Also, in this specification, if any portion is referred to as being "electrically connected" to another portion, it is to be understood that the former can be "directly connected" to the latter, or "connected" to the latter via one or more intervening members.

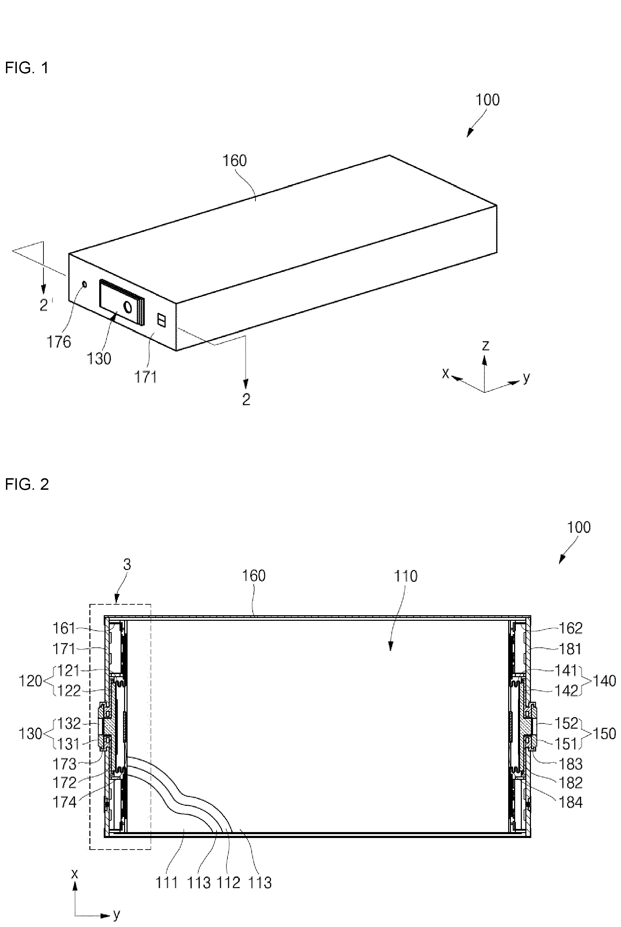

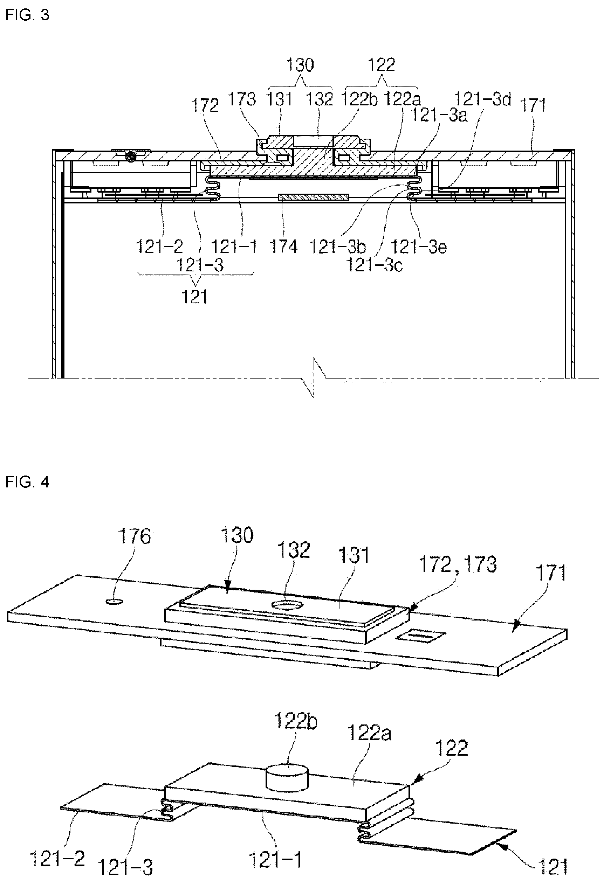

FIG. 1 illustrates a perspective view of a secondary battery 100 according to one or more embodiments; FIG. 2 illustrates a cross-sectional view taken along the line 2-2' in the secondary battery of FIG. 1; and FIG. 3 illustrates an enlarged partial cross-sectional view of a region "3" in FIG. 2. Herein, a structure of the secondary battery 100 of the present invention will be described based on the secondary battery 100 illustrated in FIG. 1.

As illustrated in FIGS. 1 to 3, the secondary battery 100 may include an electrode assembly 110, a first collector 120, a first terminal 130, a second collector 140, a second terminal 150, a case 160, a first cap assembly 170, and a second cap assembly 180.

The electrode assembly 110 may be provided by winding or stacking a stack of a first electrode plate 111, a separator 113, and a second electrode plate 112, each of which is provided in a thin plate shape or film shape. In a case in which the electrode assembly 110 is a rolled stack, a winding axis may be parallel to a longitudinal direction y of the case 160. In one or more embodiments, the electrode assembly 110 may be a stack type rather than a winding type, and a shape of the electrode assembly 110 is not limited to a particular embodiment. In a preferred embodiment, the electrode assembly 110 may be a stack type. In one or more embodiments, the electrode assembly 110 may be a Z-stack electrode assembly in which the first electrode plate 111 and the second electrode plate 112 are inserted into both sides of the separator 113 that is bent in a form of a Z-stack. In one or more embodiments, the electrode assembly 110 may be stacked such that one or more electrode assemblies 110 are adjacent to each other and accommodated in the case 160. In one embodiment, in the electrode assembly 110, the separator 113 may be fixed by a glue member 174, 184. In one embodiment, the glue member 174, 184 may be located inside the first collector 120. However, in one or more embodiments, the number of electrode assemblies 110 may not be limited thereto.

The first electrode plate 111 of the electrode assembly 110 may function as a negative electrode, and the second electrode plate 112 may function as a positive electrode, or vice versa.

The first electrode plate 111 may be formed by applying a first electrode active material, such as graphite or carbon, to a first electrode collector made of a metal foil, such as copper, a copper alloy, nickel, or a nickel alloy, and may include a first electrode tab (or first non-coating portion) that is not coated with the first electrode active material. The first electrode tab may be a passage through which current flows between the first electrode plate 111 and the first collector 120. In one or more embodiments, the first electrode tab may be provided by being cut in advance to protrude to a first side in the first electrode plate 111 and, in an embodiment, may protrude more to the first side than the separator 113 without separate cutting.

The second electrode plate 112 may be provided by applying a second electrode active material, such as a transition metal oxide, to a second electrode collector made of a metal foil, such as aluminum or an aluminum alloy, and may include a second electrode tab (or second non-coating portion) that is not coated with the second electrode active material. The second electrode tab may be a passage through which current flow between the second electrode plate 112 and the second collector 140. In one or more embodiments, the second electrode tab may be provided by being cut in advance to protrude to a second side if the second electrode plate 112 and, in an embodiment, may protrude more to the second side than the separator 113 without separate cutting.

In one or more embodiments, the first electrode tab may be located on a side surface of a left end of the electrode assembly 110, and the second electrode tab may be located on a side surface of a right end of the electrode assembly 110. Here, the left and right sides are described for convenience of explanation based on the secondary battery 100 illustrated in FIGS. 1 and 2, and the position of the secondary battery 100 may be changed if the secondary battery 100 rotates left and right or up and down. Herein, components will be described based on the secondary battery 100 illustrated in FIGS. 1 to 3.

In some embodiments, the separator 113 may be located between the first electrode plate 111 and the second electrode plate 112 to prevent or substantially prevent a short circuit and enable movement of lithium ions and, in an embodiment, may include polyethylene, polypropylene, or a composite film of polyethylene and polypropylene. In one or more embodiments, the separator 113 may be replaced with an inorganic solid electrolyte, such as sulfide, oxide, or a phosphate compound, which does not require a liquid or gel electrolyte.

The first electrode tab of the first electrode plate 111 and the second electrode tab of the second electrode plate 112 may be respectively located on both, or opposite, ends of the electrode assembly 110 as described above. In one or more embodiments, the electrode assembly 110 may be accommodated in the case 160 together with the electrolyte. In one or more embodiments, the electrolyte may include an organic solvent, such as EC, PC, DEC, EMC, or DMC, and lithium salt such as LiPF₆ or LiBF₄. In one or more embodiments, the electrolyte may be a liquid or a gel phase. In one or more embodiments, if an inorganic-based solid electrolyte is used, the electrolyte may be omitted.

In one or more embodiments, in the electrode assembly 110, the first collector 120 and the second collector 140 may be welded and connected to the first electrode tab of the first electrode plate 111 and the second electrode tab of the second electrode plate 112, which are exposed to both sides, respectively.

The first collector 120 may be made of a metal and may electrically connect the first electrode plate 111 and the first terminal 130 to each other. FIG. 4 illustrates an exploded perspective view before the first terminal 130 and the first collector 120 are coupled to each other. Herein, a structure and coupling relationship of the first collector 120 will be described with reference to FIGS. 3 and 4.

In one or more embodiments, the first collector 120 may be accommodated inside the case 160 and interposed between a first cap plate 171 and the electrode assembly 110.

In one or more embodiments, when the first terminal 130 positioned on the side of the first cap plate 171 and the first collector 120 are bonded by laser welding, there may be a variable due to pressing force. Accordingly, in one or more embodiments, by providing a side of the first collector 120 as a spring member, sufficient pressing force may be provided during welding. In a preferred embodiment, a side of the first collector 120 may be a spring member. The spring member of the first collector 120 will be described in further detail below.

The first collector 120 may include a first collector plate 121 that is in contact with and coupled to the first electrode tab (non-coating portion) of the first electrode plate 111 and a second collector plate 122 that is in contact with and coupled to the first terminal 130. The first collector plate 121 and the second collector plate 122 may be integrally provided or separably provided. In one embodiment, the first collector plate 121 and the second collector plate 122 may be integrated with each other. In an alternative embodiment, the first collector plate 121 and the second collector plate 122 may be separably provided.

In one or more embodiments, the first collector 120 may be made of copper or a copper alloy.

The first collector plate 121 may extend in a first direction x, which is a longitudinal direction of the first cap plate 171 that is a surface of the electrode assembly 110 and may have a substantially plate shape. The first collector plate 121 may have a same polarity as the first electrode plate 111 by being electrically connected to (e.g., coupled through welding in a state of being in contact with) the first electrode tab exposed at an end of the electrode assembly 110.

The first collector plate 121 may include a central portion 121-1 having a central area protruding outward and an edge 121-2 extending in both, or opposite, directions from the central portion 121-1.

An outer surface of the central portion 121-1 may be coupled to an inner side of the second collector plate 122 by welding. An inner surface of the edge 121-2 may be electrically connected to (e.g., welded and coupled to) the first electrode tab of the electrode assembly 110. As compared to the edge portion 121-2, the central portion 121-1 may protrude in an outward direction in which the first cap plate 171 is located. The central portion 121-1 may be spaced apart from a surface of the electrode assembly 110.

A connection portion 121-3 may be located from the central portion 121-1 toward the edge portion 121-2 between the central portion 121-1 and the edge portion 121-2. The central portion 121-1 may be located closer to a side of the first cap plate 171 than the edge portion 121-2.

In one or more embodiments, the first collector plate 121 may include the connection portion 121-3 and the edge portion 121-2, which are provided at both, or opposite, sides in the first direction x, using the central portion 121-1 as a center. Because the first collector 120 is provided to protrude outward by the connection portion 121-3, a space may be defined inside the first collector 120. A first glue member 174 may be provided in the space to fix the separator 113 of the electrode assembly 110.

In one or more embodiments, the connection portion 121-3 may be provided as a spring member, for example, made of an elastically deformable material. For example, the connection portion 121-3 may be provided as a plate-shaped spring member. In one or more embodiments, as illustrated in FIG. 3, both sides of the plate-shaped spring member may be provided with a first flat part 121-3a extending from the central portion 121-1, a first bent part 121-3b extending from the first flat part 121-3a, a second flat part 121-3c extending from the first bent part 121-3b, a second bent part 121-3d extending from the second flat part 121-3c, and a third flat part 121-3e extending from the second bent part 121-3d.

However, in one or more embodiments, a number of flat parts and bent parts of the connection portion 121-3 is not limited thereto. That is, the shape of the connection portion 121-3 is not limited and may be provided in any of various shapes having elasticity such that compression and rollback may occur. Although not shown, according to a preferred embodiment, the connection portion 121-3 may be provided as any of a C-type structure bent at least twice, an omega (Ω type, a convex ( 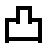 ) type, a bridge type, and a bellows type. However, in one or more embodiments, the spring member is not limited thereto and may have any of various structures that perform a buffering action by using elasticity and restoring force of a material.

In one or more embodiments, as the spring member is provided in the first collector plate 121, the first collector 120 may be pressed toward the first terminal 130. In one or more embodiments, the second collector plate 122 of the first collector 120 and the first terminal 130 may be in close contact with each other. In one or more embodiments, the second collector plate 122 and the first terminal 130 may be welded and coupled in a state of being in close contact with each other by the spring member of the first collector plate 121 to improve coupling force.

In one or more embodiments, a concave-convex shape may be provided on the first collector plate 121 to function as the spring, thereby generating force pushing up the first collector 120 toward the first terminal 130 according to a degree of design of interference. The force may allow the contact area between the first terminal 130 and the first collector 120 to increase during external through-welding, thereby securing higher welding quality.

In one or more embodiments, as illustrated in FIG. 3, a size of the central portion 121-1 of the first collector plate 121 may be greater than that of the inner surface of the second collector plate 122. In one or more embodiments, a length of the central portion 121-1 of the first collector plate 121 in the first direction x may be greater than a length of the inner surface of the second collector plate 122. In one or more embodiments, an area of the central portion 121-1 of the first collector plate 121 may be greater than that of the inner surface of the second collector plate 122.

However, embodiments are not limited thereto, and a size of the central portion 121-1 of the first collector plate 121 may be less than that of the inner surface of the second collector plate 122.

The second collector plate 122 may extend in the first direction x and may have a substantially plate shape. The second collector plate 122 may be in contact with the outer surface of the first collector plate 121 and may be electrically connected to (e.g., in contact with and welded to be coupled to the inner surface of) the first terminal 130.

The second collector plate 122 may further include a protrusion 122b protruding outward from a central area 122a of the outer surface. An outer surface of the protrusion 122b may be electrically connected to the first terminal 130 (e.g., coupled to the inner surface of the first terminal 130 by contact and welding). According to one embodiment, in the central portion 121-1, a central area 122a may protrude outward, and an outer surface may be coupled to an inside of the second collector plate 122. The outer surface of the protrusion 122b may be in contact with and welded to an inner surface of the first terminal 130.

In one or more embodiments, a size of the inner surface of the second collector plate 122 may be less than that of the central portion 121-1 of the first collector plate 121. In one or more embodiments, a length of the inner surface of the second collector plate 122 in the first direction x may be less than that of the central portion 121-1 of the first collector plate 121.

The first terminal 130 may be made of a metal and may be electrically connected to the protrusion 122b by contact and welding. In one or more embodiments, the first terminal 130 may include a first terminal plate 131 and a first terminal groove 132. In one embodiment, the first terminal 130 may have a first terminal groove 132 at a position corresponding to the protrusion 122b.

In one or more embodiments, the first terminal 130 may be made of aluminum or an aluminum alloy.

In one embodiment, the first terminal 130 may comprise a first terminal plate 131, and the protrusion 122b may be in contact with an area of the first terminal plate 131, which is adjacent to the first terminal groove 132. In another embodiment, the first terminal groove 132 may have a diameter less than that of the protrusion 122b.

In one or more embodiments, the first terminal 130 is the negative electrode, and the first terminal 130 and the first collector 120 may be made of a same metal. However, in one or more embodiments, the first terminal 130 and the first collector 120 are made of different metals. In one or more embodiments, a clad sheet (not shown) may be further provided between the first terminal 130 and the first collector 120. The clad sheet may couple and electrically connect the first terminal 130 made of different metals to the first collector 120. In one or more embodiments, the clad sheet may be a sheet in which an aluminum sheet and a copper sheet are bonded by thermal compression. For example, the clad sheet may be a sheet in which aluminum having a thickness of about 2 T and copper having a thickness of about 0.5 T to about 0.7 T are bonded by thermal compression. The aluminum sheet of the clad sheet may be coupled to the first terminal 130 by welding, and the copper sheet may be coupled to the first collector 120 by welding.

The first terminal plate 131 may be located outside or above the first cap plate 171. In one or more embodiments, the first terminal groove 132 may be provided in an inward direction from an outer surface of the first terminal plate 131. In the first terminal plate 131, an area on which the first terminal groove 132 is provided may have a thickness less than that of each of other areas. The first terminal plate 131 may be welded to the second collector plate 122 outside the first cap plate 171 through the first terminal groove 132.

The first terminal groove 132 may be defined in a partial area of the first terminal plate 131. The first terminal groove 132 may be defined in a substantially central area of the first terminal plate 131 or in an area corresponding to the protrusion 122b of the second collector plate 122.

In one or more embodiments, a first insulating member 172 may be further interposed between the first terminal plate 131 and the first cap plate 171. In one or more embodiments, a first seal gasket 173 may be further interposed between the outer surface of the first terminal plate 131 and the first cap plate 171 to seal a space between the first terminal 130 and the first cap plate 171.

First, the first terminal plate 131 may be in contact with and be coupled to the second collector plate 122 of the first collector 120 on a surface.

The first terminal plate 131 of the first terminal 130 may be exposed and protrude from the outside of the first cap plate 171.

The second collector 140 may be made of a metal and may electrically connect the second electrode plate 112 and the second terminal 150 to each other. The second collector 140 may be provided as a metal plate and include a third collector plate 141 that is in contact with and coupled to the second electrode tab of the second electrode plate 112 and a fourth collector plate 142 that is in contact with and coupled to the second terminal 150. In one or more embodiments, the second collector 140 may be coupled to the electrode assembly 110 and the second terminal 150 in a shape that is symmetrical to the first collector 120 with respect to the electrode assembly 110. In one or more embodiments, the second collector 140 may be made of aluminum or an aluminum alloy.

The second terminal 150 may be made of a metal and may be electrically connected to the second collector 140. In one or more embodiments, the first terminal 150 may include a first terminal plate 151 and a first terminal groove 152.

In one or more embodiments, the second terminal plate 151 may be located inside a second cap plate 181. In one or more embodiments, a second insulating member 182 may be further interposed between the second terminal plate 151 and the second cap plate 181. In one or more embodiments, a second seal gasket 183 may be further interposed between the second terminal plate 151 and the second cap plate 181.

In one or more embodiments, the second terminal 150 may have a same shape and structure as the first terminal 130. However, the second terminal 150 may be coupled to the electrode assembly 110 through the second collector 140 in a shape that is symmetrical to the first terminal 130 with respect to the electrode assembly 110. In one or more embodiments, the second terminal 150 may be made of aluminum or an aluminum alloy. In one or more embodiments, the second terminal 150 and the second collector 140 are made of a same metal, and the second terminal 150 and the second collector 140 may be directly coupled by welding.

In one or more embodiments, the case 160 may have a substantially hollow rectangular parallelepiped shape with openings 161 and 162 defined at both, or opposite, sides, and the electrode assembly 110 coupled to the first and second collectors 120 and 140 may be inserted into the case 160 through either of openings 161 and 162.

In one or more embodiments, the case 160 may include two long side surfaces of a rectangle, which connect top and bottom surfaces extending in the second direction y that is a longitudinal direction to a long side between the top and bottom surfaces, and extend in the second direction y. In one or more embodiments, in the case 160, the top and bottom surfaces and the two long side surfaces may be integrated with each other.

In one or more embodiments, the case 160 may have a vent hole (not shown) passing through the long side surface. A safety vent (not shown) may be installed in the vent hole of the case 160. In one or more embodiments, the safety vent may be provided with a notch that is thinner than other areas so as to be opened at a certain or set pressure.

The first cap assembly 170 may be coupled to a left opening 161 of the case 160. In one or more embodiments, the first cap assembly 170 may include a first cap plate 171, a first insulating member 172, a first seal gasket 173, and a first glue member 174.

In one or more embodiments, the first cap plate 171 may have a flat rectangular plate shape to seal the left opening 161 of the case 160. The first cap plate 171 may include a terminal grove corresponding to the first terminal groove 132 and passing between an outer surface and an inner surface and an electrolyte injection hole. The protrusion 122b of the second collector plate 122 may pass through the first terminal groove of the first cap plate 171 and be coupled to the first terminal plate 131. In one or more embodiments, after the first cap plate 171 is coupled to the case 160, the electrolyte injection port may be sealed by a stopper 176 after the electrolyte is injected into the case 160.

The first insulating member 172 may be interposed between the inner surface of the first cap plate 171 and the second collector plate 122. The first insulating member 172 may be in close contact with the inner surface of the first cap plate 171 and may also be in close contact with the first seal gasket 173. The first insulating member 172 may be made of an insulating material to insulate the first cap plate 171 and the second collector plate 122 from each other.

In one or more embodiments, the first seal gasket 173 may be made of an insulating material and be provided between the first cap plate 171 and the first terminal plate 131 or on the outer surface of the first terminal plate 131 to seal a gap between the first cap plate 171 and the first terminal plate 131. The first seal gasket 173 may prevent or substantially prevent external moisture from being penetrated into the secondary battery 100 or prevent or substantially prevent the electrolyte contained in the secondary battery 100 from leaking to the outside. In one or more embodiments, the first seal gasket 173 may be manufactured with the first insulating member 172 in an insert molding method.

In one or more embodiments, the first cap plate 171 may be electrically separated from the first terminal 130 and the second collector plate 122 by the first insulating member 172 and the first seal gasket 173.

The second cap assembly 180 may be coupled to a right opening 162 of the case 160. In one or more embodiments, the second cap assembly 180 may include a second cap plate 181, a second insulating member 182, a second seal gasket 183, and a second glue member 184. In one or more embodiments, the second cap assembly 180 may have a same shape and structure as the first cap assembly 170. In one or more embodiments, a coupling shape and structure of the second cap assembly 180 and the second terminal 150 may be the same as those of the first cap assembly 170 and the first terminal 130. In one or more embodiments, the coupling shape of the second cap assembly 180 and the second terminal 150 may be symmetrical to the coupling shape of the first cap assembly 170 and the first terminal 130 with respect to the case 160.

In the secondary battery 100, the first cap assembly 170 coupled to the first terminal 130 may be coupled to an opening of a first side of the case 160, and the second cap assembly 180 coupled to the second terminal 150 may be coupled to an opening of a second side of the case 160, and, thus, the first terminal 130 and the second terminal 150 may be located at both, or opposite, sides of the case 160 by using the case 160 as a center. The secondary battery 100 may be provided with the first terminal 130 and the second terminal 150 at both, or opposite, sides thereof, and, thus, in a case in which a plurality of secondary batteries 100 are coupled in the form of a module, a cooling member (not shown) may be coupled to each of the upper and lower areas of the case 160. In one or more embodiments, deterioration of the secondary battery 100 may be reduced to improve cooling performance.

For example, in the battery module, in a state in which the long side surfaces are disposed to face each other in the plurality of secondary batteries 100, the first terminals 130 and/or the second terminals 150, which are respectively exposed to both sides, may be electrically connected to each other.

In one or more embodiments, the first terminal 130 and the second terminal 150 may be provided at both, or opposite, sides of the secondary battery 100, and, thus, if the plurality of secondary batteries are coupled in the form of the module, because charging/discharging current flows along each terminal at both sides, the two terminals may be provided at one side to prevent or substantially prevent the deterioration from occurring compared to the case in which the charging/discharging current flows along the two terminals at the one side. In one or more embodiments, if the plurality of secondary batteries 100 are coupled in the form of the module, space utilization may be improved because the respective terminals are connected to each other at both sides.

According to one or more embodiments of the present invention, the bent part may be added to the collector plate such that the collector plate ascends toward the terminal based on the electrode assembly, and, if the terminal and the collector plate are welded, the contact area may be increased to provide the sufficient pressing force. As a result, the weldability between the terminal and the collector plate may be improved, and a strong bonding force may be induced.

According to one or more embodiments of the present invention, the collector plate may function as a spring to prevent or substantially prevent the electrode assembly from being damaged even if a degree of interference is excessive, attenuate an impact of the electrode assembly due to vibration after welding, improve usability of the collector plate, and simplify the components.

### List of reference signs

- 100: Secondary battery
- 110: Electrode assembly
- 111: First electrode plate
- 112: Second electrode plate
- 113: Separator
- 120: First collector
- 121: First collector plate
- 121-1: Central portion
- 121-2: Edge portion
- 121-3: Connection portion
- 121-3a: First flat part
- 121-3b: First bent part
- 121-3c: Second flat part
- 121-3d: Second bent part
- 121-3e: Third flat part
- 122: Second collector plate
- 122a: Central area
- 122b: Protrusion
- 130: First terminal
- 131: First terminal plate
- 132: First terminal groove
- 140: Second collector
- 141: Third collector plate
- 142: Fourth collector plate
- 150: Second terminal
- 151: Second terminal plate
- 152: First terminal groove
- 160: Case
- 161: Left opening
- 162: Right opening
- 170: First cap assembly
- 171: First cap plate
- 172: First insulating member
- 173: First seal gasket
- 174: First glue member
- 176: Stopper
- 180: Second cap assembly
- 181: Second cap plate
- 182: Second insulating member
- 183: Second seal gasket
- 184: Second glue member
- 120, 140: First and second collectors
- 161, 162: Openings

## Claims

1. A secondary battery (100) comprising:
an electrode assembly (110) comprising a first electrode tab and a second electrode tab, which are exposed at opposite sides, respectively;
a first collector (120) electrically connected to the first electrode tab;
a case (160) configured to accommodate the electrode assembly (110) and the first collector (120) and having opposite open sides;
a first cap plate (171) configured to seal an opening (161, 162) of a first side of the case (160); and
a first terminal (130) electrically connected to the first collector (120) and exposed to an outside of the first cap plate (171),
wherein the first collector (120) comprises a first collector plate (121) at a side of the first electrode tab and a second collector plate (122) at a side of the first terminal (130),
the first collector plate (121) comprises:
a central portion (121-1) that is in contact with the second collector plate (122);
an edge portion (121-2) extending from the central portion (121-1) in opposite directions and coupled to the first electrode tab; **characterized in that** the secondary battery further comprises
a connection portion (121-3) located between the central portion (121-1) and the edge portion (121-2) extending in the opposite direction from the central portion (121-1) in a direction from the central portion (121-1) to the edge portion (121-2), the connection portion (121-3) comprising at least one bent part.

2. The secondary battery (100) as claimed in claim 1, wherein the connection portion (121-3) comprises:
a first flat part (121-3a) extending from the central portion (121-1);
a first bent part (121-3b) extending from the first flat part (121-3a);
a second flat part (121-3c) extending from the first bent part (121-3b);
a second bent part (121-3d) extending from the second flat part (121-3c); and
a third flat part (121-3e) extending from the second bent part (121-3d).

3. The secondary battery (100) as claimed in claim 1 or 2, wherein the connection portion (121-3) is provided as an elastically deformable material having any of a C-type, an Ω type, a convex type, a bridge type, and a bellows type.

4. The secondary battery (100) as claimed in any of claims 1 to 3, wherein, in the central portion (121-1), a central area (122a) protrudes outward, and an outer surface is coupled to an inside of the second collector plate (122).

5. The secondary battery (100) as claimed in any of claims 1 to 4, wherein the first collector plate (121) and the second collector plate (122) are integrated with each other.

6. The secondary battery (100) as claimed in any of claims 1 to 5, wherein the first collector plate (121) and the second collector plate (122) are separably provided.

7. The secondary battery (100) as claimed in any of claims 1 to 6, further comprising a protrusion (122b) protruding outward on a central area (122a) of the second collector plate (122).

8. The secondary battery (100) as claimed in any of claims 1 to 7, wherein an outer surface of the protrusion (122b) is in contact with and welded to an inner surface of the first terminal (130).

9. The secondary battery (100) as claimed in any of claims 1 to 8, wherein the first terminal (130) has a first terminal groove (132) at a position corresponding to the protrusion (122b).

10. The secondary battery (100) as claimed in any of claims 1 to 9, wherein the first terminal (130) comprises a first terminal plate (131), and the protrusion (122b) is in contact with an area of the first terminal plate (131), which is adjacent to the first terminal groove (132).

11. The secondary battery (100) as claimed in claim 9 or 10, wherein the first terminal groove (132) has a diameter less than that of the protrusion (122b).

12. The secondary battery (100) as claimed in any of claims 1 to 11, further comprising an insulating member (172, 182) between the first terminal (130) and the first cap plate (171).

13. The secondary battery (100) as claimed in any of claims 1 to 12, wherein the electrode assembly (110) comprises a Z-stack electrode assembly (110) in which a positive electrode plate and a negative electrode plate are inserted into both sides of a separator (113) that is bent in a form of a Z-stack.

14. The secondary battery (100) as claimed in claim 13, wherein, in the electrode assembly (110), the separator (113) is fixed by a glue member (174, 184).

15. The secondary battery (100) as claimed in claim 14, wherein the glue member (174, 184) is located inside the first collector (120).

## Patentansprüche

1. Sekundärbatterie (100), umfassend:
eine Elektrodenanordnung (110) mit einer ersten Elektrodenlasche und einer zweiten Elektrodenlasche, die jeweils an gegenüberliegenden Seiten freiliegen;
einen ersten Kollektor (120), der elektrisch mit der ersten Elektrodenlasche verbunden ist;
ein Gehäuse (160), das zur Aufnahme der Elektrodenanordnung (110) und des ersten Kollektors (120) konfiguriert ist und gegenüberliegende offene Seiten aufweist;
eine erste Abdeckplatte (171), die so konfiguriert ist, dass sie eine Öffnung (161, 162) einer ersten Seite des Gehäuses (160) abdichtet; und
einen ersten Anschluss (130), der elektrisch mit dem ersten Kollektor (120) verbunden ist und zur Außenseite der ersten Abdeckplatte (171) hin freiliegt,
wobei der erste Kollektor (120) eine erste Kollektorplatte (121) an einer Seite der ersten Elektrodenlasche und eine zweite Kollektorplatte (122) an einer Seite des ersten Anschlusses (130) umfasst,
wobei die erste Kollektorplatte (121) Folgendes umfasst:
einen mittleren Abschnitt (121-1), der mit der zweiten Kollektorplatte (122) in Kontakt steht;
einen Randabschnitt (121-2), der sich vom mittleren Abschnitt (121-1) in entgegengesetzte Richtungen erstreckt und mit der ersten Elektrodenlasche gekoppelt ist; **dadurch gekennzeichnet, dass** die Sekundärbatterie ferner Folgendes umfasst:
einen Verbindungsabschnitt (121-3), der sich zwischen dem mittleren Abschnitt (121-1) und dem Randabschnitt (121-2) befindet und sich in entgegengesetzter Richtung vom mittleren Abschnitt (121-1) in einer Richtung vom mittleren Abschnitt (121-1) zum Randabschnitt (121-2) erstreckt, wobei der Verbindungsabschnitt (121-3) mindestens einen gebogenen Teil umfasst.

2. Sekundärbatterie (100) nach Anspruch 1, wobei der Verbindungsabschnitt (121-3) Folgendes umfasst:
einen ersten flachen Teil (121-3a), der sich vom mittleren Abschnitt (121-1) erstreckt;
einen ersten gebogenen Teil (121-3b), der sich vom ersten flachen Teil (121-3a) erstreckt;
einen zweiten flachen Teil (121-3c), der sich vom ersten gebogenen Teil (121-3b) erstreckt;
einen zweiten gebogenen Teil (121-3d), der sich vom zweiten flachen Teil (121-3c) erstreckt; und
einen dritten flachen Teil (121-3e), der sich vom zweiten gebogenen Teil (121-3d) erstreckt.

3. Sekundärbatterie (100) nach Anspruch 1 oder 2, wobei der Verbindungsabschnitt (121-3) als elastisch verformbares Material vorgesehen ist, das einen der folgenden Typen aufweist: C-Typ, Ω-Typ, konvexen Typ, Brückentyp und Balgtyp.

4. Sekundärbatterie (100) nach einem der Ansprüche 1 bis 3, wobei im mittleren Abschnitt (121-1) ein mittlerer Bereich (122a) nach außen vorsteht und eine Außenfläche mit einer Innenseite der zweiten Kollektorplatte (122) gekoppelt ist.

5. Sekundärbatterie (100) nach einem der Ansprüche 1 bis 4, wobei die erste Kollektorplatte (121) und die zweite Kollektorplatte (122) miteinander integriert sind.

6. Sekundärbatterie (100) nach einem der Ansprüche 1 bis 5, wobei die erste Kollektorplatte (121) und die zweite Kollektorplatte (122) trennbar vorgesehen sind.

7. Sekundärbatterie (100) nach einem der Ansprüche 1 bis 6, umfassend ferner einen Vorsprung (122b), der an einem mittleren Bereich (122a) der zweiten Kollektorplatte (122) nach außen vorsteht.

8. Sekundärbatterie (100) nach einem der Ansprüche 1 bis 7, wobei eine Außenfläche des Vorsprungs (122b) mit einer Innenfläche des ersten Anschlusses (130) in Kontakt steht und mit dieser verschweißt ist.

9. Sekundärbatterie (100) nach einem der Ansprüche 1 bis 8, wobei der erste Anschluss (130) an einer Position, die dem Vorsprung (122b) zugeordnet ist, eine erste Anschlussnut (132) aufweist.

10. Sekundärbatterie (100) nach einem der Ansprüche 1 bis 9, wobei der erste Anschluss (130) eine erste Anschlussplatte (131) umfasst, wobei der Vorsprung (122b) mit einem Bereich der ersten Anschlussplatte (131) in Kontakt steht, der an die erste Anschlussnut (132) angrenzt.

11. Sekundärbatterie (100) nach Anspruch 9 oder 10, wobei die erste Anschlussnut (132) einen Durchmesser aufweist, der kleiner ist als der des Vorsprungs (122b).

12. Sekundärbatterie (100) nach einem der Ansprüche 1 bis 11, umfassend ferner ein Isolierelement (172, 182) zwischen dem ersten Anschluss (130) und der ersten Abdeckplatte (171).

13. Sekundärbatterie (100) nach einem der Ansprüche 1 bis 12, wobei die Elektrodenanordnung (110) eine Z-Stapel-Elektrodenanordnung (110) umfasst, bei der eine positive Elektrodenplatte und eine negative Elektrodenplatte in beide Seiten eines Separators (113) eingesetzt sind, der in Form eines Z-Stapels gebogen ist.

14. Sekundärbatterie (100) nach Anspruch 13, wobei in der Elektrodenanordnung (110) der Separator (113) durch ein Klebeelement (174, 184) fixiert ist.

15. Sekundärbatterie (100) nach Anspruch 14, wobei sich das Klebeelement (174, 184) innerhalb des ersten Kollektors (120) befindet.

## Revendications

1. Batterie secondaire (100) comportant :
un ensemble d'électrodes (110) comportant une première languette d'électrode et une deuxième languette d'électrode, qui sont exposées sur des côtés opposés, respectivement ;
un premier collecteur (120) électriquement connecté à la première languette d'électrode ;
un boîtier (160) configuré pour recevoir l'ensemble d'électrodes (110) et le premier collecteur (120) et ayant des côtés ouverts opposés ;
une première plaque formant capuchon (171) configurée pour rendre étanche une ouverture (161, 162) d'un premier côté du boîtier (160) ; et
une première borne (130) électriquement connectée au premier collecteur (120) et exposée vers un extérieur de la première plaque formant capuchon (171),
dans laquelle le premier collecteur (120) comporte une première plaque de collecteur (121) sur un côté de la première languette d'électrode et une deuxième plaque de collecteur (122) sur un côté de la première borne (130),
la première plaque de collecteur (121) comporte :
une portion centrale (121-1) qui est en contact avec la deuxième plaque de collecteur (122) ;
une portion de bord (121-2) s'étendant à partir de la portion centrale (121-1) dans des directions opposées et couplée à la première languette d'électrode ;
**caractérisé en ce que** la batterie secondaire comporte en outre une portion de connexion (121-3) située entre la portion centrale (121-1) et la portion de bord (121-2) s'étendant dans la direction opposée par rapport à la portion centrale (121-1) dans une direction allant de la portion centrale (121-1) à la portion de bord (121-2), la portion de connexion (121-3) comportant au moins une partie cintrée.

2. Batterie secondaire (100) selon la revendication 1, dans laquelle la portion de connexion (121-3) comporte :
une première partie plate (121-3a) s'étendant à partir de la portion centrale (121-1) ;
une première partie cintrée (121-3b) s'étendant à partir de la première partie plate (121-3a) ;
une deuxième partie plate (121-3c) s'étendant à partir de la première partie cintrée (121-3b) ;
une deuxième partie cintrée (121-3d) s'étendant à partir de la deuxième partie plate (121-3c) ; et
une troisième partie plate (121-3e) s'étendant à partir de la deuxième partie cintrée (121-3d).

3. Batterie secondaire (100) selon la revendication 1 ou 2, dans laquelle la portion de connexion (121-3) se présente sous la forme d'un matériau élastiquement déformable ayant l'un quelconque parmi un type C, un type Ω, un type convexe, un type pont et un type soufflet.

4. Batterie secondaire (100) selon l'une quelconque des revendications 1 à 3, dans laquelle, dans la portion centrale (121-1), une zone centrale (122a) fait saillie vers l'extérieur, et une surface externe est couplée avec un intérieur de la deuxième plaque de collecteur (122).

5. Batterie secondaire (100) selon l'une quelconque des revendications 1 à 4, dans laquelle la première plaque de collecteur (121) et la deuxième plaque de collecteur (122) sont solidaires l'une de l'autre.

6. Batterie secondaire (100) selon l'une quelconque des revendications 1 à 5, dans laquelle la première plaque de collecteur (121) et la deuxième plaque de collecteur (122) sont ménagées de manière séparable.

7. Batterie secondaire (100) selon l'une quelconque des revendications 1 à 6, comportant en outre une saillie (122b) faisant saillie vers l'extérieur sur une zone centrale (122a) de la deuxième plaque de collecteur (122).

8. Batterie secondaire (100) selon l'une quelconque des revendications 1 à 7, dans laquelle une surface externe de la saillie (122b) est en contact avec une surface interne de la première borne (130) et soudée à ladite surface.

9. Batterie secondaire (100) selon l'une quelconque des revendications 1 à 8, dans laquelle la première borne (130) possède une première rainure de borne (132) à une position correspondant à la saillie (122b).

10. Batterie secondaire (100) selon l'une quelconque des revendications 1 à 9, dans laquelle la première borne (130) comporte une première plaque de borne (131), et la saillie (122b) est en contact avec une zone de la première plaque de borne (131), qui est adjacente à la première rainure de borne (132).

11. Batterie secondaire (100) selon la revendication 9 ou 10, dans laquelle la première rainure de borne (132) présente un diamètre inférieur à celui de la saillie (122b).

12. Batterie secondaire (100) selon l'une quelconque des revendications 1 à 11, comportant en outre un organe isolant (172, 182) entre la première borne (130) et la première plaque formant capuchon (171).

13. Batterie secondaire (100) selon l'une quelconque des revendications 1 à 12, dans laquelle l'ensemble d'électrodes (110) comporte un ensemble d'électrodes à empilement en Z (110) dans lequel une plaque d'électrode positive et une plaque d'électrode négative sont insérées dans les deux côtés d'un séparateur (113) qui est cintré sous la forme d'un empilement en Z.

14. Batterie secondaire (100) selon la revendication 13, dans laquelle, dans l'ensemble d'électrodes (110), le séparateur (113) est fixé par un organe formant colle (174, 184).

15. Batterie secondaire (100) selon la revendication 14, dans laquelle l'organe formant colle (174, 184) est situé à l'intérieur du premier collecteur (120).
